# EUROPEAN PATENT SPECIFICATION

(11) **EP 3 912 757 B1**
(45) Date of publication and mention of the grant of the patent: **07.09.2022**
(21) Application number: 21174729.0
(22) Date of filing: 19.05.2021
(51) Int. Cl.: B23Q 7/04, B27M 1/08

(54) **MACHINE TO PROCESS SECTION BARS, IN PARTICULAR MADE OF ALUMINIUM, LIGHT ALLOYS, PVC OR THE LIKE**
MASCHINE ZUR VERARBEITUNG VON PROFILSTÄBEN, INSBESONDERE AUS ALUMINIUM, LEICHTLEGIERUNGEN, PVC ODER DERGLEICHEN
MACHINE POUR TRAITER DES BARRES DE SECTION, FABRIQUÉES EN PARTICULIER EN ALUMINIUM, ALLIAGES LÉGERS, PVC OU ANALOGUES

(30) Priority: 19.05.2020 IT 202000011542
(43) Date of publication of application: 24.11.2021
(73) Proprietor: F.O.M. Industrie S.r.l., 47841 Cattolica (IT)
(72) Inventor: LATTANZI, Lorenzo, 61121 PESARO (PU) (IT)
(74) Representative: Manconi, Stefano

(56) References cited:
- EP-A1- 3 254 803
- EP-A1- 3 398 713
- DE-A1-102017 005 196

## Description

### TECHNICAL FIELD

The invention relates to a machine to process section bars, in particular made of aluminium, light alloys, PVC or the like.

### BACKGROUND ART

In the section bar processing industry a machine is known, for example from Patent Document EP 3 254 803 A1 which forms the basis for the preamble of appended claim 1. Said machine comprises an elongated base extending in a first direction; at least one operating station, which is obtained along the base and is provided with a cutting device and/or a drilling device and/or a milling device to process the section bars; a first feeding unit to feed the section bars to the operating station; and a second feeding unit to receive the section bars from the operating station.

The second feeding unit comprises a roller conveyor device, which extends in the first direction and is connected to the operating station, and a belt conveyor device, which extends in a second direction transverse to the first direction and is connected to the roller conveyor device.

The roller conveyor device comprises a plurality of rollers, which are mounted so as to rotate around respective rotation axes parallel to one another and to the second direction and are further mounted so as to move in a third direction, which is orthogonal to the aforesaid first and second directions, between a lifted position, in which the rollers receive the section bars from the operating station, and a lowered position, in which the rollers release the section bars onto the belt conveyor device.

The second feeding unit further comprises an extraction clamp, which is movable along the roller conveyor device in the first direction in order to transfer the section bars, one after the other, from the operating station onto the roller conveyor device.

In use, once the section bars have been transferred onto the roller conveyor device one after the other, the rollers are lowered in order to release the section bars onto the belt conveyor device.

Known section bar processing machines of the type described above are affected by some drawbacks mainly arising from the fact that, in order to allow section bars of different formats to be held, the extraction clamp has a relatively large size in the first direction and, hence, is capable of using, in a limited manner, only part of the length of the roller conveyor device.

As a consequence the transfer of section bars from the operating station to the belt conveyor device requires a relatively long operating cycle and a substantially constant presence of operators.

### DISCLOSURE OF INVENTION

It is an object of the present invention to provide a machine to process section bars, in particular made of aluminium, light alloys, PVC or the like, which is designed to eliminate the aforementioned drawbacks in a straightforward, relatively low-cost manner.

According to the present invention, there is provided a machine to process section bars, in particular made of aluminium, light alloys, PVC or the like, according to the appended claims.

### BRIEF DESCRIPTION OF THE DRAWINGS

The invention will now be described with reference to the accompanying drawings, showing a non-limiting embodiment thereof, wherein:
figure 1 is a schematic perspective view, with parts removed for greater clarity, of a preferred embodiment of the section bar processing machine according to the present invention;
figures 2, 3 and 4 are three schematic perspective view, with parts removed for greater clarity, of a detail of the machine of figure 1;
figure 5 is a schematic perspective view, with parts removed for greater clarity, of a detail of figures 2, 3 and 4; and
figures 6 and 7 show two schematic perspective views, with parts removed for greater clarity, of a detail of figure 5.

### BEST MODE FOR CARRYING OUT THE INVENTION

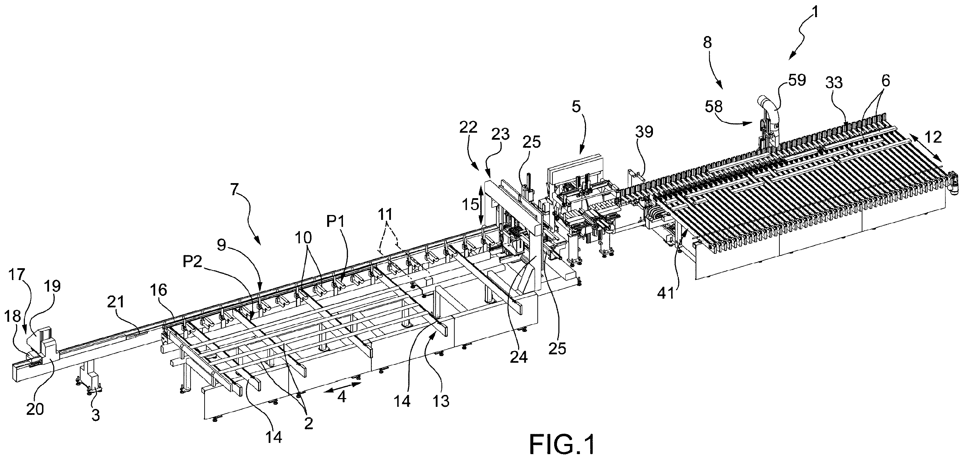

With reference to figure 1, number 1 indicates, as a whole, a machine to process section bars 2, in particular made of aluminium, light alloys, PVC or the like, having a flat elongated shape.

The machine 1 comprises an elongated base 3 extending in a horizontal direction 4; a cutting station 5, which is obtained in the area of an intermediate point of the base 3 and is configured to cut the section bars 2 into pieces 6; and two feeding units 7, 8, which are arranged on opposite sides of the station 5 in the direction 4 in order to feed the section bars 2 to the station 5 and receive the pieces 6 from the station 5, respectively.

The unit 7 comprises a roller conveyor device 9, which extends in the direction 4 and has a plurality of lower rollers 10, which are mounted so as to rotate around respective rotation axes 11 parallel to one another and to a horizontal direction 12 transverse to the direction 4 and define a support surface P1 for at least one section bar 2.

The unit 7 further comprises a belt conveyor device 13, which faces the device 9 in the direction 12 and has a plurality of conveyor belts 14, which are parallel to one another and to the direction 12, extend between the rollers 10 and define a support surface P2 for at least one section bar 2.

The rollers 10 are movable in a vertical direction 15, which is orthogonal to the directions 4 and 12, between a lifted position, in which the surface P1 extends above the surface P2 so as to disengage the section bars 2 from the belts 14, and a lowered position, in which the surface P1 extends under the surface P2 so as to release the section bars 2 onto the belts 14.

In particular, each roller 10 is movable in the direction 15 between its lifted position and its lowered position independently of the other rollers 10.

The unit 7 is further provided with a longitudinal guide member 16, which is obtained on the base 3 parallel to the direction 4, and with a moving device 17, which is mounted on the longitudinal guide member 16 so as to move the section bars 2 along the surface P1 of the rollers 10 in the direction 4.

The device 17 comprises a first horizontal slide 18, which is coupled to the longitudinal member 16 in a sliding manner so as to make, relative to the base 3, straight movements along the longitudinal member 16 in the direction 4; a second horizontal slide 19, which is coupled to the horizontal slide 18 in a sliding manner so as to make, relative to the horizontal slide 18, straight movements in the direction 12; and a vertical slide 20, which is coupled to the horizontal slide 19 in a sliding manner so as to make, relative to the horizontal slide 19, straight movements in the direction 15.

The vertical slide 20 has an elongated shape, extends in the direction 4 and supports a holding member 21, which is connected to a free end of the vertical slide 20.

The member 21 is coupled to the vertical slide 20 in a rotary manner so as to rotate, relative to the vertical slide 20, around a rotation axis (not shown) parallel to the direction 4 and comprises two jaws (not shown) movable between a clamping position and a release position to clamp and release the section bars 2.

The machine 1 further has a processing station 22, which is obtained in the area of an end of the unit 7 facing the station 5 and is provided with a milling and/or drilling assembly 23.

The assembly 23 comprises an annular frame 26, which extends around the device 9 and supports a plurality of tool-carrier spindles 25, which are mounted parallel to the directions 12 and 15, are designed to each receive and hold a respective milling and/or drilling tool, which is known and not shown, and are movable, relative to the base 3, in the directions 12 and 15.

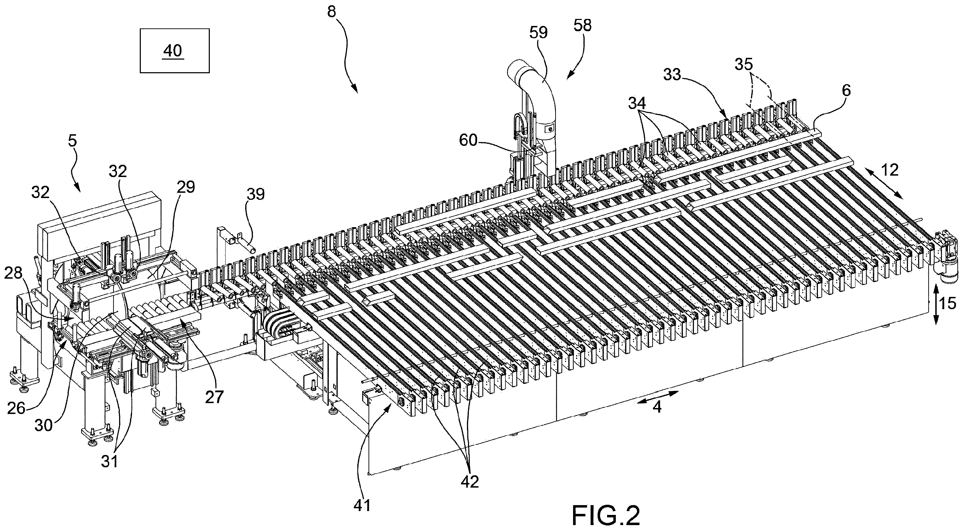

According to figure 2, 3 and 4, the station 5 is provided with an input support device 26 for the section bars 2 and with an output support device 27 for the pieces 6.

In this case, the device 26 is a roller support device and is movable in the direction 15 between a lowered position, in which the device 26 is placed on the outside of a moving path of the member 21, and a lifted position, in which the device 26 projects into the moving path of the member 21 and further is movable in the direction 4 between an open position, in which the device 26 allows swarf to fall into/onto a collecting device (not shown) arranged under the devices 26 and 27, and a closed position, in which the device 26 prevents the section bars 2 from falling into/onto the collecting device (not shown).

In this case, the device 27 is a roller support device and is movable in the direction 15 between a lowered position, in which the device 27 is placed on the outside of the moving path of the member 21, and a lifted position, in which the device 27 projects into the moving path of the member 21 and further is movable in the direction 4 between an open position, in which the device 27 allows swarf to fall into/onto the aforesaid collecting device (not shown), and a closed position, in which the device 27 prevents the pieces 6 from falling into/onto the collecting device (not shown).

The station 5 is further provided with a cutting assembly 28 comprising a support plate 29 with a circular shape, which is mounted along the devices 26, 27 perpendicularly to the direction 12 and is coupled to the base 3 in a rotary manner so as to rotate, relative to the base 3, around a rotation axis (not shown), which is parallel to the direction 12.

The assembly 28 further comprises a cutting blade 30, which extends through the plate 29 perpendicularly to the plate 29, is moved in the direction 12 between the devices 26 and 27 and is mounted so as to rotate around a rotation axis (not shown), whose orientation depends on the position of the plate 29 around its own rotation axis (not shown).

The assembly 28 is further provided, in this case, with a pair of clamping members 31 to clamp the section bars 2 against the plate 29 in the direction 12 and with a pair of clamping members 32 to clamp the section bars 2 against the devices 26, 27 in the direction 15.

Obviously, according to a variant which is not shown herein, when the cutting assembly 28 is not operated, the feeding unit 8 receives the entire section bar 2.

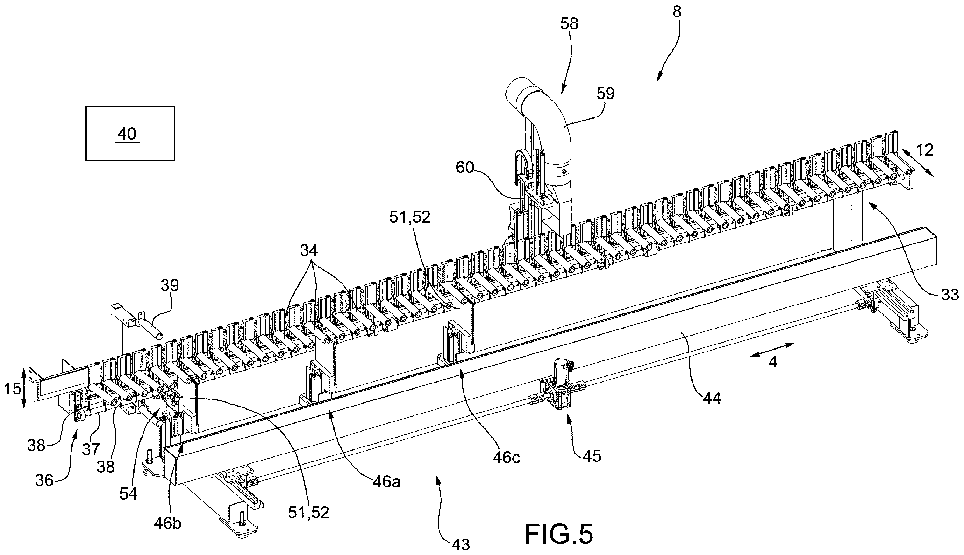

With reference to figure 5, the unit 8 comprises a roller conveyor device 33, which extends in the direction 4 and has a plurality of lower rollers 34, which are mounted so as to rotate around respective rotation axes 35, which are substantially parallel to one another and to the direction 12.

The rollers 34 are moved around the relative axes 35 by an operating device 36 comprising a rotary bar 37, which extends under the rollers 34 in the direction 4, is mounted so as to rotate around a longitudinal axis of its due to the thrust of an electric motor (not shown) and is connected to each roller 34 by means of a relative belt transmission 38.

The operation of the device 33 and, hence, the position of each piece 6 in the direction 4 are selectively controlled by means of a detection device 39, in this case a photodetector, which is designed to detect an initial starting position of the piece 6 along the device 33, a measuring device (not shown), in this case an encoder associated with the aforesaid electric motor (not shown), which is designed to measure the number or revolutions of the bar 37 around its own longitudinal axis and, hence, of the rollers 34 around the relative axes 35, and an electronic control unit 40, which is connected to the detection device 39 and the measuring device (not shown).

The unit 8 further comprises a belt conveyor device 41, which faces the device 33 in the direction 12 and has a plurality of conveyor belts 42, which are parallel to one another and to the direction 12 and are each aligned with a respective roller 34 in the direction 12.

The unit 8 further comprises a transfer assembly 43 to transfer the pieces 6 from the rollers 34 of the device 33 to the belts 42 of the device 41.

The assembly 43 comprises a horizontal slide defined by an elongated cross member 44, which extends along the device 33 in the direction 4 and is coupled to the base 3 in a sliding manner so as to move, relative to the base 3 and due to the thrust of an operating device 45, in the direction 12 under the belts 42.

The assembly 43 further comprises, in this case, three transfer devices 46, which are distributed along the cross member 44 in the direction 4 and are arranged one (hereinafter indicated with 46a) between the other two (hereinafter indicated with 46b and 46c).

According to embodiments which are not shown herein, the number of transfer devices 46 is different from three, for example is equal to one.

Each device 46a, 46b, 46c comprises a horizontal slide 47, which is coupled to the cross member 44 in a sliding manner so as to move under the rollers 34 in the direction 4 due to the thrust of an operating device 48; and a vertical slide 49, which is coupled to the horizontal slide 47 in a sliding manner so as to make, relative to the horizontal slide 47 and due to the thrust of an actuator cylinder 50, straight movements in the direction 15.

The vertical slide 49 is configured so as to define a first support element 51, which has the shape of a flat plate perpendicular to the direction 4 and defines an upper support edge for the pieces 6.

The vertical slide 49 further bears a second support element 52, which has the shape of a flat plate perpendicular to the direction 4, defines an upper support edge for the pieces 6 and projects upwards from the element 51 in the direction 15.

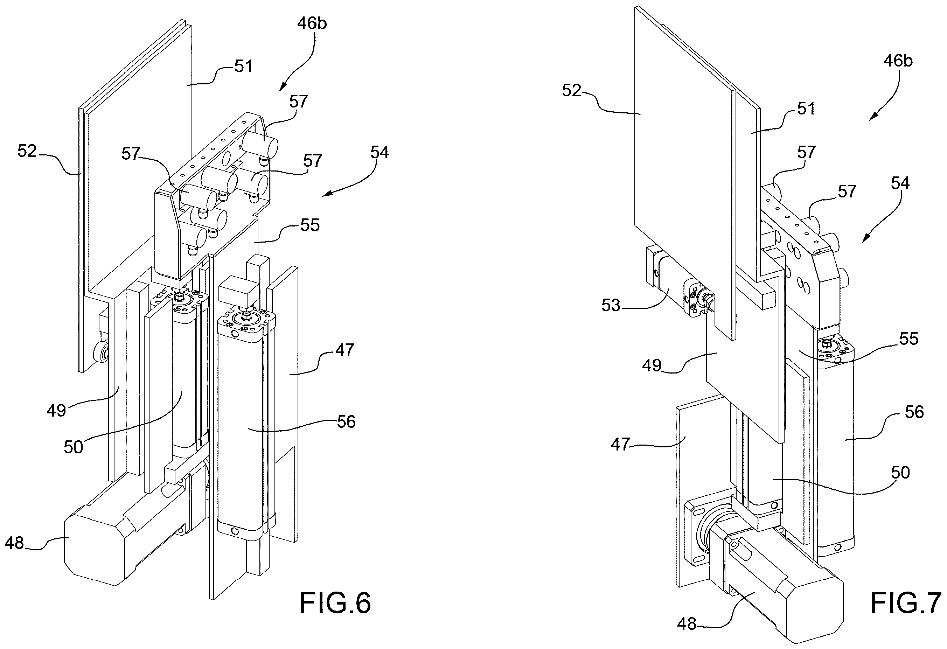

The element 52 is coupled to the vertical slide 49 in a sliding manner so as to move, relative to the element 51 and due to the thrust of an actuator cylinder 53 fixed to the vertical slide 49, in the direction 12 between a first position (figure 6), in which the elements 51 and 52 face one another in the direction 4, and a second position (figure 7), in which the elements 51 and 52 are staggered relative to one another in the direction 12.

The device 46b supports a blowing device 54 to remove swarf generated by the milling and/or drilling assembly 23 and/or by the cutting assembly 28 from the pieces 6.

The device 54 comprises a vertical slide 55, which is coupled to the horizontal slide 47 in a sliding manner so as to make, relative to the horizontal slide 47 and due to the thrust of an actuator cylinder 56, straight movements in the direction 15.

The vertical slide 55 is provided, in the area of an upper end of its, with a plurality of blowing nozzles 57, which are oriented parallel to the direction 4 and are connected to a known compressed-air pneumatic device, which is not shown herein.

The device 54 cooperates with a suction device 58 comprising a suction hood 59, which extends above the rollers 34, is connected to a known pneumatic suction device (not shown) and is coupled to the base 3 so as to move, relative to the base 3, in the directions 4 and 15.

The device 58 further comprises a pressing element 60, which is coupled to the suction hood 59 so as to move, relative to the suction hood 59, between a lowered position locking the pieces 6 on the rollers 34 and a lifted position releasing the pieces 6.

The operation of the feeding unit 8 will now be described starting from an instant in which the detection device 39 detects the presence of a piece 6 in the initial starting position and in which the support elements 51, 52 are arranged in their first position (figure 6).

The bar 37 is operated so as to move the piece 6 along the device 33 in the direction 4 and is deactivated when the piece 6 reaches a final arrival position facing an empty position without pieces 6 on the device 41 (figure 2) .

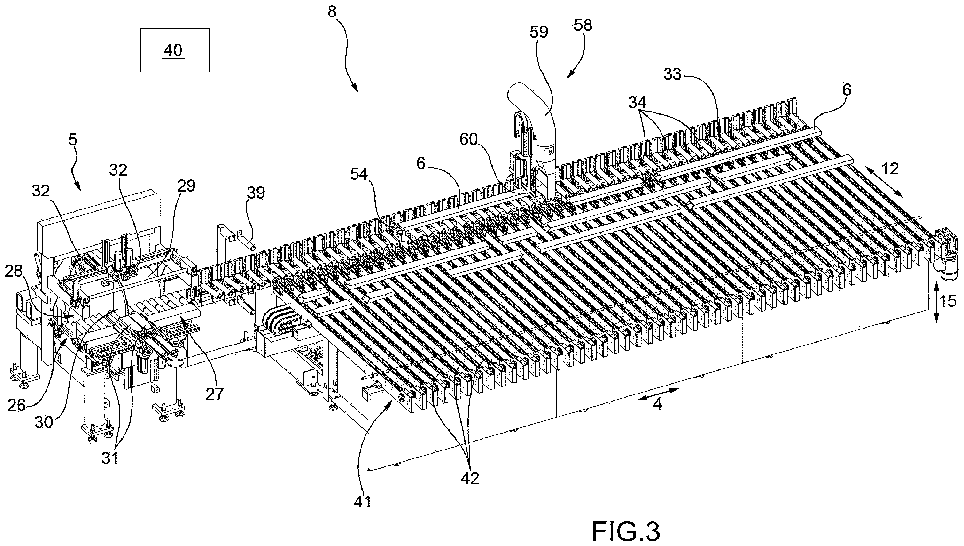

The devices 46a, 46b, 46c are moved along the cross member 44 under the piece 6 in the direction 4, the blowing device 54 is lifted so as to face a first free end of the piece 6, the suction hood 59 is lowered so as to face a second free end of the piece 6 and the pressing element 60 is lowered so as to lock the piece 6 on the rollers 34 and allow the suction hood 59 to suck a compressed air jet emitted by the device 54 along the piece 6 (figure 3).

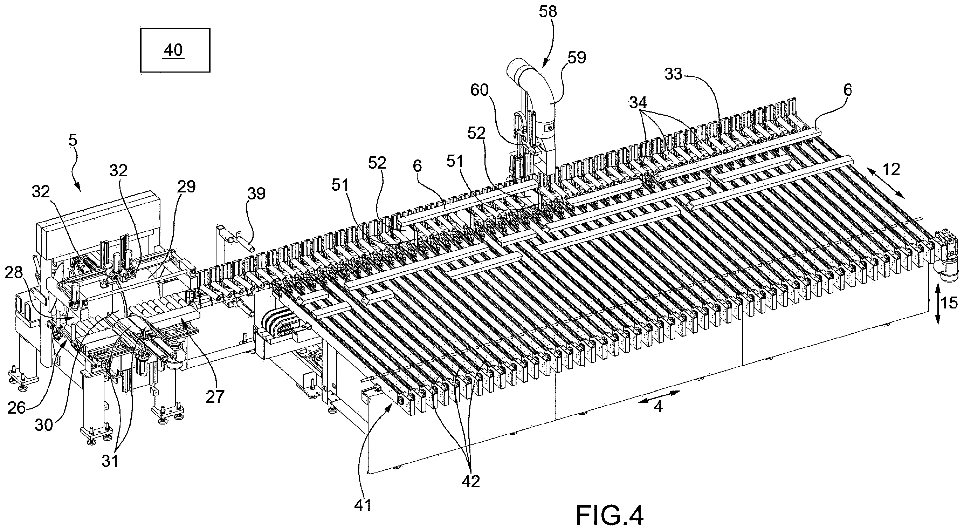

At this point, the device 54 is lowered, the pressing element 60 is lifted and the support elements 51, 52 of the three devices 46a, 46b, 46c are lifted between respective pairs of adjacent rollers 34 in order to allow the elements 52 to disengage the piece 6 from the device 33 (figure 4).

Subsequently, the elements 52 are moved to their second position (figure 7) so as to increase the support surface available for the piece 6. In particular, when the piece 6 has a shaped profile and is unable to balance on the elements 52, the movement of the elements 52 to their second position allows the piece 6 to tip over the elements 51.

Finally, the cross member 44 is moved by the operating device 45 in the direction 12 so as to allow the elements 51, 52 to be placed between the belts 42, and the slides 49 and, hence, the elements 51, 52 are lowered again in the direction 15 to release the piece 6 onto the belts 42.

The machine 1 offers some advantages mainly due to the fact that the feeding unit 8 optimizes the transfer of the pieces 6 from the roller support device 33 onto the belt conveyor device 41 and, hence, the operating cycle of the belt conveyor device 41 itself.

The unit 8 further leads to an advantage lying in the fact that the transfer of the pieces 6 from the roller conveyor device 33 onto the belt conveyor device 41 does not cause a sliding and, hence, damaging of the pieces 6 themselves.

## Claims

1. A machine to process section bars (2), in particular made of aluminium, light alloys, PVC or the like, the machine comprising an elongated base (3) extending in a first direction (4); at least one operating station (5, 22), which is obtained along the base (3) so as to carry out at least one processing operation of the section bars (2); a first feeding unit (7) to feed the section bars (2) to the operating station (5, 22); and a second feeding unit (8) to receive the section bars (2) from the operating station (5, 22); the second feeding unit (8) comprising a roller conveyor device (33) comprising, in turn, a plurality of rollers (34), which are mounted so as to rotate around respective rotation axes (35), which are parallel to one another and to a second direction (12), which is transverse to the first direction (4), and a belt conveyor device (41) comprising, in turn, a plurality of belts (42), which are parallel to one another and to the second direction (12); and being **characterized in that** the second feeding unit (8) further comprises at least one transfer device (46) to transfer each section bar (2) from the roller conveyor device (33) to the belt conveyor device (41); the transfer device (46) being movable in the first direction (4) so as to move along the roller conveyor device (33) and the belt conveyor device (41), in the second direction (12) so as to move between the rollers (34) and the belts (42), and in a third direction (15), which is orthogonal to said first and second directions (4, 12), so as to disengage the section bars (2) from the rollers (34) and release the section bars (2) on the belts (42) .

2. A machine according to claim 1, wherein the transfer device (46) comprises at least one supporting element (51, 52), which is configured to support the section bars (2) at the bottom.

3. A machine according to claim 1 or 2, wherein the transfer device (46) comprises two supporting elements (51, 52), which are designed to support the section bars (2) and are movable relative to one another in the second direction (12) .

4. A machine according to any one of the preceding claims, wherein the second feeding unit (8) further comprises an operating device (36) to rotate the rollers (34) of the roller conveyor device (33) around the relative rotation axes (35).

5. A machine according to claim 4, wherein the operating device (36) comprises an electric motor, a transmission system (37, 38) to connect the electric motor to the rollers (34), and a measuring system, in particular an encoder, to selectively control the operation of the electric motor and, hence, the position of each section bar (2) along the roller conveyor device (33) in the first direction (4).

6. A machine according to claim 5, wherein the second feeding unit (8) further comprises a detection device (39) to detect an initial position of each section bar (2) along the roller conveyor device (33).

7. A machine according to claim 6 and further comprising an electronic control unit (40), which is connected to the operating device (36) and to the detection device (39) and is configured to store the presence of a section bar (2) in said initial position and cause the deactivation of the operating device (36) when the measuring system detects a final position of the section bar (2) along the roller conveyor device (33).

8. A machine according to any one of the preceding claims, wherein each belt (42) is aligned with a relative roller (34) in the second direction (12).

9. A machine according to any one of the preceding claims, wherein the second feeding unit (8) further comprises a blowing device (54) to blow a gas under pressure along, in particular into, the section bar (2) starting from a first free end thereof, so as to remove swarf, and a suction device (58) to suck the gas under pressure in the area of a second free end of the section bar (2) .

10. A machine according to claim 9, wherein the blowing device (54) is mounted on the transfer device (46) and is movable in the third direction (15) between a lifted position, in which the blowing device (54) faces the first free end, and a lowered position, in which the blowing device (54) disengages the first free end.

11. A machine according to claim 9 or 10, wherein the suction device (58) is movable along the roller conveyor device (33) in the first direction (4) and, furthermore, is movable between an operating position, in which the suction device (58) faces the second free end, and a rest position, in which the suction device (58) disengages the second free end.

12. A machine according to any one of the preceding claims, wherein the operating station (5, 22) is provided with a drilling and/or milling device (23) and/or with a cutting device (28).

## Patentansprüche

1. Maschine zum Bearbeiten von Profilstangen (2), insbesondere aus Aluminium, Leichtmetalllegierungen, PVC oder dergleichen, wobei die Maschine aufweist: eine längliche Basis (3), die sich in einer ersten Richtung (4) erstreckt; zumindest eine Betriebsstation (5, 22), die entlang der Basis (3) erhalten wird, um zumindest einen Bearbeitungsvorgang der Profilstangen (2) auszuführen; eine erste Zuführeinheit (7) zum Zuführen der Profilstangen (2) zu der Betriebsstation (5, 22); und eine zweite Zuführeinheit (8) zum Aufnehmen der Profilstangen (2) von der Betriebsstation (5, 22); wobei die zweite Zuführeinheit (8) eine Rollenfördereinrichtung (33) aufweist, die wiederum eine Vielzahl von Rollen (34) aufweist, die derart gelagert sind, dass sie sich um jeweils zueinander parallele Drehachsen (35) drehen und zu einer zweiten Richtung (12), die quer zur ersten Richtung (4) ist, und eine Bandfördervorrichtung (41), die wiederum eine Vielzahl von Bändern (42) aufweist, die zueinander und zu der zweiten Richtung (12) parallel sind; und **dadurch gekennzeichnet, dass** die zweite Zuführeinheit (8) ferner zumindest eine Überführungsvorrichtung (46) aufweist, um jede Profilstange (2) von der Rollenfördervorrichtung (33) zu der Bandfördervorrichtung (41) zu überführen; wobei die Überführungsvorrichtung (46) in der ersten Richtung (4) bewegbar ist, um sich entlang der Rollenfördervorrichtung (33) und der Bandfördervorrichtung (41) zu bewegen, in der zweiten Richtung (12) bewegbar ist, um sich zwischen den Rollen (34) und den Bändern (42) zu bewegen, und in einer dritten Richtung (15) bewegbar ist, die orthogonal zu der ersten und zweiten Richtung (4, 12) ist, um die Profilstangen (2) von den Rollen (34) zu lösen und die Profilstangen (2) auf den Bändern (42) freizugeben.

2. Maschine nach Anspruch 1, wobei die Überführungsvorrichtung (46) zumindest ein Stützelement (51, 52) aufweist, welches konfiguriert ist, die Profilstangen (2) unten abzustützen.

3. Maschine nach Anspruch 1 oder 2, wobei die Überführungsvorrichtung (46) zwei Stützelemente (51, 52) aufweist, die eingerichtet sind, die Profilstangen (2) zu stützen, und in der zweiten Richtung (12) relativ zueinander bewegbar sind.

4. Maschine nach einem der vorhergehenden Ansprüche, wobei die zweite Zuführeinheit (8) ferner eine Betriebsvorrichtung (36) aufweist, um die Rollen (34) der Rollenfördervorrichtung (33) um die relativen Drehachsen (35) zu drehen.

5. Maschine nach Anspruch 4, wobei die Betriebsvorrichtung (36) einen Elektromotor, ein Übertragungssystem (37, 38) zum Verbinden des Elektromotors mit den Rollen (34), und ein Messsystem, insbesondere einen Encoder, aufweist, um den Betrieb des Elektromotors und damit die Position jeder Profilstange (2) entlang der Rollenfördervorrichtung (33) in der ersten Richtung (4) selektiv zu steuern.

6. Maschine nach Anspruch 5, wobei die zweite Zuführeinheit (8) ferner eine Erfassungsvorrichtung (39) aufweist, um eine Anfangsposition jeder Profilstange (2) entlang der Rollenfördervorrichtung (33) zu erfassen.

7. Maschine nach Anspruch 6 und ferner aufweist eine elektronische Steuereinheit (40), die mit der Betriebsvorrichtung (36) und der Erfassungsvorrichtung (39) verbunden ist und konfiguriert ist, das Vorhandensein einer Profilstange (2) in besagter Anfangsposition zu speichern und die Deaktivierung der Betriebsvorrichtung (36) zu bewirken, wenn das Messsystem eine Endposition der Profilstange (2) entlang der Rollenfördervorrichtung (33) erfasst.

8. Maschine nach einem der vorhergehenden Ansprüche, wobei jedes Band (42) mit einer entsprechenden Rolle (34) in der zweiten Richtung (12) ausgerichtet ist.

9. Maschine nach einem der vorstehenden Ansprüche, wobei die zweite Zuführeinheit (8) ferner eine Blasvorrichtung (54) aufweist, um ein Gas unter Druck entlang der, insbesondere in die, Profilstange (2), zu blasen, beginnend von einem ersten freien Ende, um Späne zu entfernen, und eine Absaugvorrichtung (58) zum Absaugen des Gases unter Druck in dem Bereich eines zweiten freien Endes der Profilstange (2).

10. Maschine nach Anspruch 9, wobei die Blasvorrichtung (54) an der Überführungsvorrichtung (46) montiert ist und in der dritten Richtung (15) zwischen einer angehobenen Position, in der die Blasvorrichtung (54) dem ersten freien Ende zugewandt ist, und einer abgesenkten Position, in der die Blasvorrichtung (54) das erste freie Ende außer Eingriff bringt, bewegbar ist.

11. Maschine nach Anspruch 9 oder 10, wobei die Saugvorrichtung (58) entlang der Rollenfördervorrichtung (33) in der ersten Richtung (4) bewegbar ist und außerdem zwischen einer Betriebsposition, in der die Saugvorrichtung (58) dem zweiten freien Ende zugewandt ist, und einer Ruheposition, in der die Saugvorrichtung (58) das zweite freie Ende außer Eingriff bringt, bewegbar ist.

12. Maschine nach einem der vorhergehenden Ansprüche, wobei die Betriebsstation (5, 22) mit einer Bohr- und/oder Fräsvorrichtung (23) und/oder mit einer Schneidvorrichtung (28) versehen ist.

## Revendications

1. Machine pour le traitement de barres de section (2), notamment en aluminium, alliages légers, PVC ou similaires, la machine comprenant une base allongée (3) s'étendant dans une première direction (4) ; au moins un poste de traitement (5, 22), qui est obtenu le long de la base (3) afin d'effectuer au moins une opération de traitement des barres de section (2) ; une première unité d'alimentation (7) pour amener les barres de section (2) jusqu'au poste de traitement (5, 22) ; et une deuxième unité d'alimentation (8) pour recevoir les barres de section (2) depuis le poste de traitement (5, 22) ; la deuxième unité d'alimentation (8) comprenant un dispositif convoyeur à rouleaux (33) comprenant, pour sa part, une pluralité de rouleaux (34), qui sont montés de manière à tourner autour d'axes de rotation respectifs (35), parallèles les uns aux autres et à une deuxième direction (12), qui est transversale à la première direction (4), et un dispositif convoyeur à courroies (41) comprenant, pour sa part, une pluralité de courroies (42), qui sont parallèles les unes aux autres et à la deuxième direction (12) ; et étant **caractérisé en ce que** la deuxième unité d'alimentation (8) comprend en outre au moins un dispositif de transfert (46) pour transférer chaque barre de section (2) du dispositif convoyeur à rouleaux (33) au dispositif convoyeur à courroies (41) ; le dispositif de transfert (46) étant mobile selon la première direction (4) de sorte à se déplacer le long du dispositif convoyeur à rouleaux (33) et du dispositif convoyeur à courroies (41), selon la deuxième direction (12) de sorte à se déplacer entre les rouleaux (34) et les courroies (42), et selon une troisième direction (15), qui est orthogonale auxdites première et deuxième directions (4, 12), de manière à dégager les barres de section (2) des rouleaux (34) et à libérer les barres de section (2) sur les courroies (42).

2. Machine selon la revendication 1, dans laquelle le dispositif de transfert (46) comprend au moins un élément support (51, 52), qui est configuré pour supporter les barres de section (2) dans la partie inférieure.

3. Machine selon la revendication 1 ou 2, dans laquelle le dispositif de transfert (46) comprend deux éléments supports (51, 52), qui sont conçus pour supporter les barres de section (2) et sont mobiles l'un par rapport à l'autre selon la deuxième direction (12).

4. Machine selon l'une quelconque des revendications précédentes, dans laquelle la deuxième unité d'alimentation (8) comprend en outre un dispositif de commande (36) pour faire tourner les rouleaux (34) du dispositif convoyeur à rouleaux (33) autour des axes de rotation correspondants (35).

5. Machine selon la revendication 4, dans laquelle le dispositif de commande (36) comprend un moteur électrique, un système de transmission (37, 38) pour connecter le moteur électrique aux rouleaux (34), et un système de mesure, notamment un encodeur, pour contrôler sélectivement le fonctionnement du moteur électrique et, par conséquent, la position de chaque barre de section (2) le long du dispositif convoyeur à rouleaux (33) selon la première direction (4).

6. Machine selon la revendication 5, dans laquelle la deuxième unité d'alimentation (8) comprend en outre un dispositif de détection (39) pour détecter une position initiale de chaque barre de section (2) le long du dispositif convoyeur à rouleaux (33).

7. Machine selon la revendication 6 et comprenant en outre une unité de commande électronique (40), qui est connectée au dispositif de commande (36) et au dispositif de détection (39) et est configuré pour mémoriser la présence d'une barre de section (2) dans ladite position initiale et provoquer la désactivation du dispositif de commande (36) lorsque le système de mesure détecte une position finale de la barre de section (2) le long du dispositif convoyeur à rouleaux (33).

8. Machine selon l'une quelconque des revendications précédentes, dans laquelle chaque courroie (42) est alignée avec un rouleau correspondant (34) selon la deuxième direction (12).

9. Machine selon l'une quelconque des revendications précédentes, dans laquelle la deuxième unité d'alimentation (8) comprend en outre un dispositif de soufflage (54) pour souffler un gaz sous pression le long de, en particulier dans, la barre de section (2) en partant d'une première extrémité libre de celle-ci, de manière à éliminer des copeaux, et un dispositif d'aspiration (58) pour aspirer le gaz sous pression dans la zone d'une seconde extrémité libre de la barre de section (2).

10. Machine selon la revendication 9, dans laquelle le dispositif de soufflage (54) est monté sur le dispositif de transfert (46) et est mobile selon la troisième direction (15) entre une position relevée, dans laquelle le dispositif de soufflage (54) fait face à la première extrémité libre, et une position abaissée, dans laquelle le dispositif de soufflage (54) libère la première extrémité libre.

11. Machine selon la revendication 9 ou 10, dans laquelle le dispositif d'aspiration (58) est mobile le long du dispositif convoyeur à rouleaux (33) selon la première direction (4) et, en outre, est mobile entre une position de fonctionnement, dans laquelle le dispositif d'aspiration (58) fait face à la seconde extrémité libre, et une position de repos, dans laquelle le dispositif d'aspiration (58) libère la seconde extrémité libre.

12. Machine selon l'une quelconque des revendications précédentes, dans laquelle le poste de traitement (5, 22) est pourvu d'un dispositif de perçage et/ou de fraisage (23) et/ou d'un dispositif de découpe (28).
